# EUROPEAN PATENT SPECIFICATION

(11) **EP 1 072 712 B1**
(45) Date of publication and mention of the grant of the patent: **02.06.2010**
(21) Application number: 00202626.8
(22) Date of filing: 21.07.2000
(51) Int. Cl.: D04H 11/00, B32B 7/12, B32B 5/16, B32B 27/12, B05D 1/16, B60J 10/00

(54) **USE OF A FLOCKED FLEXIBLE THERMOPLASTIC MATERIAL AS A WINDOW SCRAPER SEALING STRIP FOR PRODUCING GLASS RUN CHANNEL PROFILES**
VERWENDUNG EINES BEFLOCKTEN FLEXIBLEN THERMOPLASTISCHEN MATERIAL ALS DICHTLEISTE FÜR FENSTER ZUR HERSTELLUNG VON FENSTERFÜHRUNGSSCHIENEN
UTILISATION D'UN PROFILÉ D'ÉTANCHÉITÉ EN MATÉRIAU THERMOPLASTIQUE SOUPLE FLOQUÉ COMME JOINT LECHEUR POUR VITRE POUR LA FABRICATION DE PROFILÉS DE GUIDAGE POUR VITRES

(30) Priority: 26.07.1999 IT MI991649
(43) Date of publication of application: 31.01.2001
(73) Proprietor: Dimontonate Floccati S.p.A., 21020 Montonate di Mornago VA (IT)
(72) Inventor: Capellini, Ciro, 27029 Vigevano (Pavia) (IT)
(74) Representative: Perani, Aurelio

(56) References cited:
- EP-A- 0 037 907
- WO-A-97/39907
- DE-A- 3 414 418
- FR-A- 2 643 125
- US-A- 4 421 809
- US-A- 4 482 593
- US-A- 4 816 313
- US-A- 5 529 650
- DATABASE WPI Section Ch, Week 197934 Derwent Publications Ltd., London, GB; Class A18, AN 1979-62483B XP002127207 & JP 54 088973 A (TOYODA GOSEI KK), 14 July 1979 (1979-07-14)
- DATABASE WPI Section Ch, Week 197644 Derwent Publications Ltd., London, GB; Class A35, AN 1976-81850X XP002127208 & JP 51 103171 A (TOYO CLOTH CO), 11 September 1976 (1976-09-11)

## Description

As is known, using the so-called flocking technique, suitable substrates are coated with fibres referred to as "flock", which in general have a thickness of the order of a few millimetres, so as to render these substrates velvety.

The flocked substrates, according to the present invention are window-scraper sealing strips for glass run channel profiles in motor vehicles, which profiles consist of a rigid part that supports a flocked flexible part so as to facilitate sliding of the windows and prevent vibration of the window inside the door and the consequent noise during use of the vehicle.

As is known, flocking of a substrate is generally obtained by means of a flocking machine. The main types of flocked substrates consist, for example, of rubber-based materials to be inserted in a rigid substrate made of metal or of plastic material having particular characteristics of rigidity.

There exist, moreover, flocked substrates made of thermoplastic rubber, which can be made by co-extrusion of a rigid substrate made of thermoplastic material and of a flexible portion made of thermoplastic rubber.

Flocking of this type of co-extruded combination is made by introducing the material into the flocking machine after co-extrusion.

In order to get the flock to adhere, adhesive is spread over the aforesaid co-extruded substrate, this requiring prior application of anchoring primers, or of solvents that present proble+ms of handling because they are harmful and at times even toxic.

It would therefore be advisable to avoid the use of the said solvents and chemical additives.

In addition, a flocking system of the above kind requires in-line plants, which consequently require a lot of space, as well as environmental depuration systems, given that the substances necessary for the process are harmful.

It is evident that the above characteristics involve problems of being anti-economic.

EP-A-0 037 907 discloses polypropylene mouldings having a textured surface, produced by lamination or flocking, when a polypropylene moulding composition which contains a rubber-like copolymer and reinforcing fillers is converted into the mouldings to be laminated or flocked.

US-A-4 816 313 describes a soft resin product, which comprises a resin main body and a soft resin covering part, wherein said resin main body comprises polyolefin and said soft resin covering part comprises a styrene based thermoplastic elastomer composition having a hardness Hs of 20 to 50.

FR-A-2 643 125 discloses a method for manufacturing a seal for a moving surface, particularly for a window or glass of a motor vehicle, and seal obtained by implementing it. The sealing lip or lips of the seal is or are flocked by fastening its or their constituent fibres or hairs onto a thin layer of plastic, which is co-extruded with the seal and brought up to a temperature which makes it sticky for fastening the said hairs or fibres, so that the use of any adhesive is excluded.

Flocks made of PVC are moreover known. These can be made by co-extruding a PVC having characteristics of rigidity as a substrate and a PVC having characteristics of softness as the flexible part.

Also in this case, flocking takes place after co-extrusion, as was described previously for flocking of substrates made of thermoplastic rubber.

In this case, adhesives that do not present such high levels of toxicity may be required, but there remains even so the problem of the use of very costly in-line equipment.

For PVC substrates, a more economic solution is, however, possible as an alternative to in-line flocking by forming a pre-flocked ribbon obtained from a PVC film which has already been flocked and which is subsequently bonded, at output from the extruder, to the rigid PVC strip when the latter is still hot, either by directly passing it through the extrusion head or in the sizer positioned after the extrusion head.

A purpose of the present invention is to achieve flocking of a substrate such as that made of thermoplastic rubber whereby it is not necessary to use, as has been done up to now in the known art, harmful, or even worse, toxic solvents and costly in-line plants, which necessarily involve also environmental depuration systems for treating the above-mentioned solvents.

In other words, the purpose of the invention is basically to achieve flocking of the sort referred to above for the PVC substrate obtained by bonding a pre-flocked ribbon to substrates that are far more advantageous than PVC itself, i.e., those consisting of thermoplastic rubbers.

In the case of window-scraper sealing strips for glass run channel profiles for motor vehicles, the car manufactures require a minimum critical value of adhesion of the flock to the rubber support in the profile, which is usually not lower than 15 N/cm.

Since rubber, especially thermoplastic rubber, and a flocking material such as polyester scarcely adhere one to another, the basic purpose of the present invention is to find an ideal interface between the two of them which can fulfil the above requirement.

Furthermore, such flocked material should also provide a highly flexible sealing strip in the form of a ribbon to be wound in rolls, to be supplied to the car- manufacturers as a pre-flocked ribbon which they will be able to join to the rubber support in order to provide the channel profile.

For the purposes of the present invention, such material should also perform a very tight sealing action towards the window of the vehicle in every condition.

According to the present invention, it is also wanted to avoid phenomena of deformation, such as elongation or contraction, of the flocked ribbon during its bonding in extrusion with the rigid substrate.

The above purposes and other advantages that will appear more clearly are achieved with the invention as claimed in the claims 1-9 follows, the present invention proposes the use of a flocked material as a window-scraper sealing strip for glass run channel profiles in motor vehicles as claimed in claims 1-9, said flocked material is **characterized in that** it comprises one or more layers made of flexible thermoplastic material chosen from among polymers and copolymers of olefins either as such or mixed with other polymers or elastomers, on the external surface of the one of the said layers that carries the flocking material, there being applied a layer of polyurethane adhesive material for adhesion of the flocking material.

According to the present invention, by "polyurethane adhesive" is meant the polymer as such or the product of polymeric reaction of any suitable precursor. The latter will thus be any compound that is able to form, by reaction with isocyanate, a plurality of urethane groups or even biuret. The said precursor will therefore contain amine, hydroxyl or hydrogen reactive groups. According to a first embodiment, the polyurethane thus formed is crosslinked.

In an alternative embodiment, the said precursor is a non-crosslinked urethane pre-polymer which will undergo crosslinking *in situ* during forming of the flocked material.

In a further embodiment of the present invention, the polyurethane adhesive may also be non-crosslinked and water-based.

The layers that make up the flocked material for the claimed use and referred to above are made of flexible thermoplastic material chosen preferably from among polypropylene, polyethylene, ethylene-propylene copolymer, as such or mixed with natural or synthetic rubbers, or polyurethane or polyester resins.

In a preferred embodiment, between the external surface of the layer that carries the flocking material and the polyurethane adhesive there is interposed a primer, for example polyethylene imine.

According to the invention, the flocked single-layer or multilayer film thus formed may be transformed into a ribbon as such, or else be made to adhere to a thermoplastic-rubber substrate, for instance, directly inside an extruder, or else at output from the extruder itself, or in a sizer after extrusion.

As an alternative to the said thermoplastic rubber, it is possible to use a natural rubber, or else a synthetic elastomer, or EPDM.

Another purpose of the present invention is a method for forming the said material.

According to a preferred embodiment of the said method, the process starts from a film obtained from one or more layers of polyolefin or of an ethylene or propylene copolymer, or else from mixtures of such polymers, either together or with other polymers or with natural or synthetic rubbers, or polyurethane or polyester.

The above-mentioned stratified material may be subjected to a corona discharge treatment so as to obtain on at least one of the surfaces, or even on both surfaces of the single layer or of the multilayer, a surface tension preferably of at least 3.8 × 10⁻⁴ N/cm² (38 dyne/cm²).

On one or both of the faces of the single-layer or multilayer film thus obtained, a primer can then be laid.

On one of the surfaces thus treated a suitable amount of a mixture which will produce the said polyurethane adhesive for anchoring the flocking material is spread using a doctor blade or some other suitable means. The mixture may therefore be, for instance, an appropriate mixture of crosslinkable pre-polymer and an isocyanic crosslinking agent.

The next step in the process is the operation of flocking, which is carried out using a flock of polyester or polyamide, dyed or pigmented or raw, having a pre-chosen length and nature.

In order to provide a better description of the characteristics and advantages of the invention, in what follows some examples of practical implementation are given, which, however, are not intended as limiting the scope of the invention.

### EXAMPLE 1

A single-layer film having a thickness of between 60 µm and 150 µm, consisting of an ethylene-propylene copolymer, or polyethylene homopolymer or polypropylene homopolymer, or mixtures of the two, undergoes corona discharge treatment and is subsequently treated with an aqueous solution of polyethylene imine, e.g., Polymin P® produced by Basf, with or without the addition of a melaminic crosslinking agent. From 0.5 grams to 15 grams of polyethylene imine are laid out per square metre.

After this treatment, the film is spread out using a doctor blade or rotoscreen in a flocking machine equipped with a slat conveyor, with a crosslinkable or non-crosslinkable water-based polyurethane adhesive, such as

| | |
|---|---|
| *MOR-AD EPW 12/64/T25® | 100 parts |
| *MORAD 7000/T5® | 2-5 parts |
| *VITADERM ASZ® | 0-5 parts |
| AMMONIA | 0-5 parts |

| | |
|---|---|
| * Trademarks of Morton International S.p.A. | |

From 150 to 350 grams are laid per square metre. The surface thus spread is flocked with a polyester flock - dtex 3.3 dyed in paste black; length of fibre from 0.75 to 2 mm - up to complete coverage of the surface.

After being dried in an oven and after start of crosslinking, the entire product is treated with a primer on the reverse side to favour gripping to the thermoplastic rubbers; or else, if the chosen film has suitable characteristics, it is left without primer to be transformed into a ribbon subsequently.

### EXAMPLE 2

A film made up of a number of co-extruded layers or layers bonded together, which has a thickness of between 60 µm and 150 µm and consists of an ethylene-propylene copolymer or a polyethylene homopolymer or a polypropylene homopolymer, or of mixtures of the two, and of films of polyurethane, polyester, polyamide, undergoes a corona discharge treatment and subsequently treated with an aqueous solution of polyethylene imine, such as Polymin P® produced by Basf, with or without the addition of a melaminic crosslinking agent. From 0.5 to 15 grams of polyethylene imine per square metre are laid. After this treatment, the film is spread out using a doctor blade or rotoscreen in a flocking machine equipped with a slat conveyor, with a polyurethane adhesive or with mixtures of crosslinkable or non-crosslinkable water-based polyurethane adhesive, such as

| | |
|---|---|
| *RU6135® | 80 parts |
| *RU9018® | 20 parts |
| *XR2500® | 3 parts |
| *RM4456® | as required for thickening |
| AMMONIA | 1-5 parts |

| | |
|---|---|
| * Trademarks of Stahl Italia S.p.A. | |

From 100 to 450 grams are laid per square metre. The surface thus spread is flocked with a polyester flock - dtex 3 dyed in paste black; length of fibre 0.70 mm - up to complete coverage of the surface. After being dried in an oven and after start of crosslinking, the entire product is treated with a primer on the reverse side to favour gripping to the thermoplastic rubbers; or else, if the chosen film has suitable characteristics, it is left without primer to be transformed into a ribbon subsequently.

### EXAMPLE 3

The procedure is the same as the one described in the foregoing Example 2, this time applying as polyurethane adhesive a two-component polyurethane terminating in hydroxyl groups, which is made to react in the presence of an isocyanic reactive group-based crosslinking agent. According to the present example, the two-component polyurethane is the product that goes under the commercial name "Tyforce AS 141®" modified (100 parts), whilst the cross-linking agent (from 5 to 10 parts) is a trimethylol propane/tolylene diisocyanate adduct.

According to the present example, the two-component polyurethane is dissolved in an aprotic polar solvent, such as, preferably, DMF.

After the above adhesive has been applied and after flocking has been carried out, the flocked material is put into an oven at a temperature of between 80 and 120 °C for between 2 and 5 minutes.

The crosslinking reaction takes place after evaporation of the DMF solvent in the oven of the flocking plant. Crosslinking is then completed at room temperature.

### EXAMPLE 4

The procedure is again the same as that for the foregoing Example 2, applying as polyurethane adhesive the following:

| | |
|---|---|
| Crosslinkable pre-polymer | 70-80 parts |
| Crosslinking agent | 20-30 parts |
| Accelerating agent | 0.5-3 parts |

After application of the adhesive and after flocking, the material is put into an oven at a temperature of between 80 and 120 °C for between 2 and 5 minutes. In the present example, the pre-polymer is a polyurethane having a sufficiently low molecular weight as to enable its being spread in a flocking plant. This pre-polymer terminates in blocked isocyanic groups. Practically the entire crosslinking process takes place in the drying oven, where the blocking agent of the isocyanate is released by the effect of heat.

### EXAMPLE 5

The procedure is again the same as that for the foregoing Example 2, applying as polyurethane adhesive the following mixture:

| | |
|---|---|
| Polyol | 80-100 parts |
| Isocyanic crosslinking agent | 20-40 parts |

After application of the adhesive and after flocking, the material is put into an oven at a temperature of between 80 and 120 °C for between 2 and 5 minutes. The mixture of the ingredients of the adhesive is prepared *in situ* with a suitable mixing apparatus, which may be heated, whilst the reaction of polyurethane formation and crosslinking of the polyurethane takes place immediately after flocking.

### EXAMPLE 6

The procedure is again the same as that for the foregoing Example 2, using as adhesive a polyurethane terminating in isocyanic groups that is able to crosslink in the drying oven of the flocking plant by effect of the water contained in a controlled-humidity atmosphere.

In this case, the adhesive is used in amounts of between 100 and 120 parts together with a viscosity modifier in amounts of between 2 and 5 parts. After application of the adhesive and after flocking, the material is put into an oven at a temperature of between 80 and 120 °C for between 2 and 5 minutes. Crosslinking takes place in the drying oven of the flocking plant in conditions of controlled humidity and subsequently at room temperature.

In all the above examples, the adhesion of the flocking material to the rubber support in the final profile is > 15 N/cm.

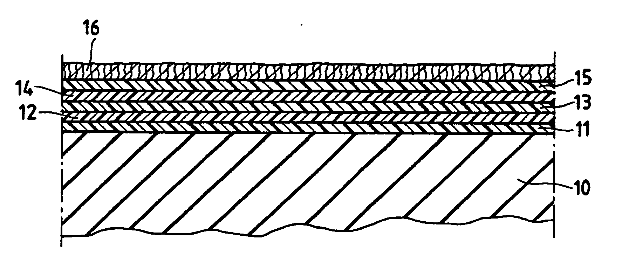

Just to provide an example, a flocked material according to the invention is shown in the figure of the attached drawing.

This drawing refers in particular to a flocked material to be used to make a window-scraper for the door of a motor vehicle.

The finished flocked material shown in the figure consists of a substrate made of thermoplastic rubber 10 on which a primer 11 is laid for adhesion of the multilayer made of flexible thermoplastic material to the thermoplastic rubber.

The above multilayer is made up of a first layer of polypropylene 12, on which a layer of ethylene-propylene polymer 13 is laid.

On the top surface of the latter is laid a primer 14 to favour application of a layer of polyurethane adhesive 15, which enables anchoring of the flocking material 16.

From the above descriptions and examples it may be understood how the flocked material according to the present invention enables the purposes and advantages initially stated to be effectively achieved.

In particular, in the case of a crosslinked polyurethane adhesive, the finished flocked material is characterized by high dimensional stability even at a high temperature, as well as resistance to solvents.

The above properties prevent the danger of deformation of the ribbon and risks of failure.

## Claims

1. Use as a window-scraper sealing strip of a flexible thermoplastic material (12)selected from polymers and copolymers of olefins as such or in a mixture with other polymers or elastomers (13), said flexible thermoplastic material being flocked with a method comprising the following steps:
a) providing a single-layer or multi-layer film made of said flexible thermoplastic material selected from polymers and copolymers of olefins, as such or in a mixture with other polymers or elastomers;
b) subjecting a first side of the said film to a surface treatment until a surface tension value of at least 3.8 × 10⁻⁴ N/cm² is achieved;
d) laying a polyurethane adhesive (15) on the treated side of step b); and
e) placing a flocking material layer (16) on the polyurethane adhesive (15) laid in step d),
for producing a glass run channel profile in the car industry, said profile comprising said flocked flexible thermoplastic material adhered to a thermoplastic rubber substrate (10), wherein said adhesion to said thermoplastic rubber substrate is carried out on the other side of the single-layer or multilayer film and opposite with respect to the layer (16), said flocked flexible thermoplastic material having the adhesion value to said rubber substrate higher than 15 N/cm.

2. The use according to Claim 1, wherein the polyurethane adhesive (15) is crosslinked by reaction with isocyanate of precursor compounds containing hydroxyl, amine, or hydrogen reactive group.

3. The use according to Claim 2, wherein the crosslinking reaction occurs in the presence of a crosslinking agent.

4. The use according to Claim 3, wherein said crosslinking agent is a trimethylol propane/tolylene diisocyanate adduct.

5. The use according to any one of Claims 1-4, wherein said method further comprises the step of:
c) laying a primer (14) on the treated side of step b) between the single-layer or multilayer film and the polyurethane adhesive (15), before making the step d).

6. The use according to any one of Claims 1-5, wherein said flocked flexible thermoplastic material, is adhered to the thermoplastic rubber substrate (10) directly inside an extruder or at the output from the extruder itself or in a sizer after extrusion.

7. The use according to any one of Claim 1-7, wherein said method further comprising the step of:
f) laying a primer (11) on the treated surface of step b) between the thermoplastic rubber substrate (10) and the single-layer or multilayer film, before said flocked flexible thermoplastic material is adhered to said thermoplastic rubber substrate.

8. The use according to any one of Claims 1-7, wherein the flexible thermoplastic material is selected from polypropylene, polyethylene, ethylene-propylene copolymer, as such or mixed with natural or synthetic rubbers, or polyurethane or polyester resins.

9. The use according to any one of Claims 1-8, wherein a primer (14) is between the single-layer or multilayer film and the polyurethane adhesive (15).

## Patentansprüche

1. Verwendung eines flexiblen thermoplastischen Materials (12), das unter Polymeren und Copolymeren von Olefinen als solchen oder im Gemisch mit anderen Polymeren oder Elastomeren (13) ausgewählt ist, als Dichtleiste für Fensterschaber, wobei das thermoplastische flexible Material mittels eines Verfahren beflockt ist, das die folgenden Schritte umfaßt:
a) Bereitstellen einer einlagigen oder mehrlagigen Folie aus dem flexiblen thermoplastischen Material, das gewählt ist aus Polymeren und Copolymeren von Olefinen als solchen oder im Gemisch mit anderen Polymeren oder Elastomeren,
b) Ausführen einer Oberflächenbehandlung auf einer ersten Seite der Folie, bis ein Oberflächenspannungswert von wenigstens 3.8 x 10⁻⁴ N/cm² erzielt ist,
d) Auftragen eines Polyurethanklebstoffs (15) auf die in Schritt b) behandelte Seite und
e) Anordnen einer Beflockungsmaterialschicht (16) auf dem in Schritt d) aufgetragenen Polyurethanklebstoff (15),
zur Herstellung eines Fensterführungsschienenprofils in der Autoindustrie, wobei das Profil das beflockte flexible thermoplastische Material an einem thermoplastischen Gummisubstrat (10) angeklebt umfaßt, wobei das Ankleben an dem thermoplastischen Gummisubstrat auf der anderen Seite der einlagigen oder mehrlagigen Folie und gegenüber bezüglich der Schicht (16) ausgeführt ist, wobei das beflockte flexible thermoplastische Material einen Haftwert an dem Gummisubstrat größer als 15 N/cm hat.

2. Verwendung nach Anspruch 1, wobei der Polyurethanklebstoff (15) durch Reaktion mit Isocyanat von Vorläuferverbindungen, die eine reaktive Hydroxyl-, Amin- oder Wasserstoffgruppe enthalten, vernetzt ist.

3. Verwendung nach Anspruch 2, wobei die Vernetzungsreaktion in Anwesenheit eines Vernetzungsmittels auftritt.

4. Verwendung nach Anspruch 3, wobei das Vernetzungsmittel ein Trimethylolpropan/Tolylendiisocyanat-Addukt ist.

5. Verwendung nach einem der Ansprüche 1 bis 4, wobei das Verfahren ferner den Schritt umfaßt:
c) Aufbringen eines Primers (14) auf die in Schritt b) behandelte Seite zwischen der einlagigen oder mehrlagigen Folie und dem Polyurethanklebstoff (15), bevor der Schritt d) ausgeführt wird.

6. Verwendung nach einem der Ansprüche 1 bis 5, wobei das beflockte flexible thermoplastische Material an das thermoplastische Gummisubstrat (10) direkt in einem Extruder oder am Auslaß des Extruders selbst oder in einem Appretierer nach der Extrusion angeklebt wird.

7. Verwendung nach einem der Ansprüche 1 bis 6, wobei das Verfahren ferner den Schritt umfaßt:
f) Aufbringen eines Primers (11) auf die in Schritt b) behandelte Oberfläche zwischen dem thermoplastischen Gummisubstrat (10) und der einlagigen oder mehrlagigen Folie, bevor das beflockte flexible thermoplastische Material auf das thermoplastische Gummisubstrat geklebt wird.

8. Verwendung nach einem Ansprüche 1 bis 7, wobei das flexible thermoplastische Material gewählt ist aus Polypropylen, Polyethylen, Ethylen-Propylen-Copolymer als solches oder gemischt mit natürlichen oder synthetischen Gummis, oder Polyurethan- oder Polyesterharzen.

9. Verwendung nach einem der Ansprüche 1 bis 8, wobei ein Primer (14) zwischen der einlagigen oder mehrlagigen Folie und dem Polyurethanklebstoff (15) vorhanden ist.

## Revendications

1. Utilisation d'une matière thermoplastique souple (12) qui est choisie parmi les polymères et copolymères d'oléfines en tant que tels ou en mélange avec d'autres polymères ou élastomères (13), comme lame d'étanchéité pour raclette à vitre, ladite matière thermoplastique souple étant floquée au moyen d'un procédé qui comprend les étapes suivantes :
a) fournir une feuille monocouche ou multicouche faite de ladite matière thermoplastique souple choisie parmi les polymères et copolymères d'oléfines en tant que tels ou en mélange avec d'autres polymères ou élastomères,
b) soumettre un premier côté de ladite feuille à un traitement de surface jusqu'à ce qu'une valeur de tension superficielle d'au moins 3.8 x 10⁻⁴ N/cm² soit atteinte,
d) appliquer un adhésif de polyuréthane (15) sur le côté traité à l'étape b) et
e) disposer une couche de matière de flocage (16) sur l'adhésif de polyuréthane (15) appliqué à l'étape d),
pour la fabrication d'un profilé de guidage pour vitres dans l'industrie automobile, ledit profilé comprenant ladite matière thermoplastique souple floquée collée sur un substrat thermoplastique en caoutchouc (10), le collage sur ledit substrat thermoplastique en caoutchouc étant réalisé sur l'autre côté de ladite feuille monocouche ou multicouche et opposé par rapport à ladite couche (16), la matière thermoplastique souple floquée présentant une valeur d'adhérence sur le substrat en caoutchouc qui est supérieure à 15 N/cm.

2. Utilisation selon la revendication 1, dans laquelle ledit adhésif de polyuréthane (15) est réticulé par réaction avec de l'isocyanate de composés précurseurs comprenant un groupe hydroxyle, amine ou hydrogène réactif.

3. Utilisation selon la revendication 2, dans laquelle la réaction de réticulation a lieu en présence d'un agent de réticulation.

4. Utilisation selon la revendication 3, dans laquelle ledit agent de réticulation est un adduit de triméthylolpropane/diisocyanate de tolylène.

5. Utilisation selon l'une quelconque des revendications 1 à 4, dans laquelle le procédé comprend en outre l'étape consistant à :
c) appliquer un primaire (14) sur le côté traité à l'étape b) entre la feuille monocouche ou multicouche et l'adhésif de polyuréthane (15) avant que l'étape d) soit réalisée.

6. Utilisation selon l'une quelconque des revendications 1 à 5, dans laquelle la matière thermoplastique souple floquée est collée sur le substrat thermoplastique en caoutchouc (10) directement dans une extrudeuse ou à la sortie de l'extrudeuse même ou dans un apprêteur après l'extrusion.

7. Utilisation selon l'une quelconque des revendications 1 à 6, dans laquelle le procédé comprend en outre l'étape consistant à :
f) appliquer un primaire (11) sur la surface traitée à l'étape b) entre le substrat thermoplastique en caoutchouc (10) et la feuille monocouche ou multicouche, avant que la matière thermoplastique souple floquée soit collée sur ledit substrat thermoplastique en caoutchouc.

8. Utilisation selon l'une quelconque des revendications 1 à 7, dans laquelle la matière thermoplastique souple est choisie parmi le polypropylène, le polyéthylène, le copolymère éthylène-propylène en tant que tel ou mélangé à des caoutchoucs naturels ou synthétiques, ou les résines de polyuréthane ou de polyester.

9. Utilisation selon l'une quelconque des revendications 1 à 8, dans laquelle un primaire (14) est présent entre la feuille monocouche ou multicouche et ledit adhésif de polyuréthane (15).
